# EUROPEAN PATENT SPECIFICATION

(11) **EP 4 296 156 B1**
(45) Date of publication and mention of the grant of the patent: **18.11.2026**
(21) Application number: 22179884.6
(22) Date of filing: 20.06.2022
(51) Int. Cl.: B64C 1/06

(54) **THERMOPLASTIC COVER PANEL FOR A STRUCTURE IN AN INTERIOR SPACE OF AN AIRCRAFT**
THERMOPLASTISCHE DECKPLATTE FÜR EINE STRUKTUR IN EINEM INNENRAUM EINES FLUGZEUGES
PANNEAU THERMOPLASTIQUE DE COUVERTURE POUR UNE STRUCTURE DANS UN ESPACE INTÉRIEUR D'UN AÉRONEF

(43) Date of publication of application: 27.12.2023
(73) Proprietor: Airbus Operations GmbH, 21129 Hamburg (DE)
(72) Inventor: Gross, Claus-Peter, 21129 Hamburg (DE)
(74) Representative: LKGLOBAL Partnerschaftsgesellschaft mbB

(56) References cited:
- EP-A1- 3 156 215
- EP-A1- 3 216 690
- EP-A2- 0 279 620
- EP-A2- 2 591 909
- WO-A1-2017/112846
- DE-A1- 102014 215 661

## Description

### Technical field

The invention relates to a panel for covering a part of a structure in an interior space of an aircraft, a method for producing such a panel as well as an aircraft having a structure as well as at least one such panel for covering a part of the structure.

### Background of the invention

Commercial and transport aircraft usually comprise a fuselage having a fuselage structure and an interior space created inside it. The interior space may be used for providing a cabin for passengers or as a freight compartment. For protecting equipment components running along structural parts, such as air ducts, insulation packets, electrical lines, and other, as well as to provide a pleasing appearance, the interior space is usually cladded with cover panels. For example, passenger cabins comprise side wall panels, ceiling panels, dado panels, and other to define cabin boundaries.

Due to a common requirement in designing aircraft components, these cover panels are commonly designed as lightweight components, which comprise a combination of various materials. For example, duromer material, fibers and coatings together provide easy-to-handle, lightweight and optically pleasing components. However, due to combining these varied materials, the cover panels may be hard to recycle. A full separation of these varied materials is hardly possible, such that the sustainability remains improvable.

EP 3 156 215 A1, according to its abstract, relates to a method of making a panel assembly that includes forming a thermoplastic panel, placing a thermoset portion into a pocket in a mold, placing an attachment member into the pocket in the mold, positioning the thermoplastic panel in the mold, cooling the thermoplastic panel while heating the thermoset portion to flow at least a portion of the thermoset portion into openings defined in the thermoplastic panel, and cooling the panel assembly so that the thermoset portion hardens, thereby securing the attachment member to the thermoplastic panel.

EP 2591909 A2, according to its abstract, relates to a multifunctional fully integral panel system design, a material configuration, and a process for fabricating a net shape panel in one production cycle. The panel may comprise a base facing with an outer perimeter, a decorative film applied to the exterior of the base facing, an aft facing having an outer perimeter fused to the base facing, and a reinforcement core disposed between the unfused portions of the base and aft facings, which reinforcement core also acts as acoustic insulation. Alternatively or additionally, a foam core or blanket having thermal and/or acoustic insulation properties is attached to the external surface of the aft facing. The fabrication process involves the application of different heat treatments to panel components having different forming temperature or rubbery/elastic plateaus.

EP 279620 A2, according to its abstract, relates arcuate panel sections having a dampening layer between two honeycomb layers forming a cocoon or module which is mounted in multiple elastomeric isolators located within channel members. Support bracket, attached to the interior of the aircraft skin supports the channel adjacent deck. The module is thereby spaced apart from the aircraft frame. There is a resulting diminution of acoustic transmission from the aircraft frame to its interior passenger area.

DE 10 2014 215661 A1, according to its abstract, relates to an aircraft interior trim component that consists at least partially of a thermoplastic foam material and comprises a first surface which, when the aircraft interior trim component is mounted in an aircraft, faces an interior of an aircraft cabin, and a second surface which, when the aircraft interior trim component is mounted in an aircraft, faces away from the interior of the aircraft cabin. The second surface of the aircraft interior lining component has at least one support section and at least one surface section adjacent to the support section and recessed relative to the support section. The support section is dimensioned and arranged such that, when the aircraft interior trim component is mounted in an aircraft, it is supported on an element of a primary structure of the aircraft at least when a predetermined load acts on the first surface of the aircraft interior trim component.

WO 2017/112846 A1, according to its abstract, relates to structure includes a thermoplastic foam body having first and second major surfaces, and channels extending partially or fully through the foam body and terminating at one or both major surfaces. The surfaces of some or all of the channels are reinforced, providing the structure with increased compressive strength. The structure, which can include a skin on either or both of the major surfaces, is useful for forming aviation interior components, including aviation overhead containers, aviation interior wall panels, and aviation trays.

EP 3216690 A1, according to its abstract, relates to a lining panel with integrated electric lines for a lining of a passenger cabin of an aircraft or spacecraft. An additive manufacturing is used, or 3D printing technique to form the electric lines on or into a panel body of the lining panel.

### Summary of the invention

It is thus an object of the invention to propose a cover panel that comprises comparable mechanical properties as common cover panels, but is substantially completely recyclable.

The object is met by a cover panel having the features of independent claim 1. Advantageous embodiments and further improvements may be gathered from the subclaims and the following description.

A cover panel for covering a part of a fuselage structure in an interior space of an aircraft is proposed, the panel comprising a main panel section having an interior side and an exterior side, and at least one attachment device coupled with the exterior side, wherein the main panel section is exclusively made from a single thermoplastic material, and wherein the at least one attachment device is adapted for attaching the cover panel to the fuselage interior structure.

A gist of the invention lies in providing a cover panel for covering parts of the structure of the aircraft substantially in the same way as with common cover panels. However, a drastically improved recyclability is achieved by exclusively using a single thermoplastic material for the main panel section.

In this regard, the main panel section is to be understood as a part of the cover panel that substantially defines its size and contour depending on the intended installation position. For example, the cover panel may be a sidewall panel, a ceiling panel, a dado panel, or similar and the size and contour are dimensioned accordingly. While the interior side is intended for facing away from the respective structure, the exterior side is intended for facing the structure.

The attachment device to be coupled with the exterior side may comprise one or a plurality of brackets, pins, hooks, holes, recesses, or the like. The attachment device may be shaped complementary to a receiving device arranged on the structure to allow a form-fit engagement between the attachment device and the receiving device. It is conceivable, that the attachment device is mechanically connected to the main cover section. For example, it may be screwed or bolted to the exterior side or snapped into suitable snap connector elements. However, the attachment device is made from the same thermoplastic material and may thus also be welded to the exterior side.

Using a thermoplastic material for providing the main panel section allows to recycle the main panel section completely, without producing any waste.

Additional components, which may be added to the main panel section, may be designed to be completely removable**.** They are made from the same thermoplastic material. Thus, the panel according to the invention may preferably be completely recyclable. Ideally, the thermoplastic material is translucent to apply preferably laser welding. However, this is not absolutely required.

It is conceivable, that the dimensional stability of the cover panel might be smaller than the dimensional stability of common cover panels. However, this may be compensated by using a plurality of suitable attachments devices distributed over the exterior side of the cover panel. Also, by using suitably designed edge regions to prevent indentation of the cover panel. In most, if not all, situations the cover panel does not need to be a load carrying device and the function for covering the structure is sufficiently achieved by the proposed monolithic design without stiffening fibers or other material combinations. All additional components that need to be attached to the main panel section that are made from other materials may be mechanically (removably) be attached to the main panel section. Suitable thermoplastic materials may include PEEK (polyether ether ketone), PEKK (polyether ketone ketone), PA (polyamide), PPS (polyphenylene sulfide), PEI (polyetherimide), or the like. In particular when using PEEK and PEKK, the main panel section may comprise a sufficient dimensional stability with material thicknesses of less than 5 mm and in particular in the region of 4 mm, 3 mm or less.

In an advantageous embodiment, the panel is a sidewall panel as a lateral delimitation of a cabin. A side wall panel usually extends from a cabin floor, or an upper edge of dado panel towards an overhead stowage compartment, or a ventilation outlet directly adjacent to it. The sidewall panel is usually curved to follow the curved shape of the structure of the fuselage. The attachment device may be adapted to couple the sidewall panel with frames and/or stringers of the structure. The sidewall panel may preferably be adapted for holding insulation packets, in particular of a secondary insulation. It is to be understood that the cover panel according to the invention is not necessarily limited to covering only a single structural section between two consecutive frames, but may also extend over two, three or more such structural sections. It is conceivable that the cover panel is designed to rest on all flanges of circumferential frames of the respective structural section(s) and should therefore be adapted in size.

According to the invention, the main panel section is made from a substantially flat thermoplastic workpiece, wherein at least one stiffening element made from the same thermoplastic material is welded to the exterior side to enhance the dimensional stability of the panel. The workpiece may comprise a constant material thickness and may be cut to size prior to providing further installations. The stiffening elements may be longitudinal stiffening elements that may extend parallely to at least one of the edges of the cover panel. If the cover panel is a sidewall panel, the stiffening elements may extend along the longitudinal axis of the aircraft in the installed state of the cover panel. A plurality of stiffening elements may be provided, which are arranged parallel and at a distance to each other. Stiffening elements may be similarly designed to stringers and may comprise a curved or angled cross-sectional surface. Welding may particularly be provided with ultrasonic or laser welding methods.

In an advantageous embodiment, the substantially flat thermoplastic workpiece is thermo-bent to be curved before or after attaching the at least one stiffening element. The workpiece is thus heated to a temperature that is sufficient for conducting a plastic deformation, e.g. a glass transition temperature, wherein the thermo-bending may be conducted in or on a heated mold. For example, the workpiece is curved to conform the curvature of an interior side of the fuselage structure, if the cover panel is used as a side wall panel for the cabin.

In an exemplary embodiment, the cover panel further comprises a window cutout and a window funnel attached to the exterior side. The window funnel may preferably be made from the same thermoplastic material, e.g. through injection molding, and may be welded or overmolded to an edge region surrounding the window cutout on the exterior side. The window funnel provides a connection to an outer window mounted in the skin of the aircraft fuselage. It is to be understood that other common additional parts are provided for completing a cabin window arrangement, which include blinds, an interior window, fastening elements as well as covers for covering the fastening elements. The window cutout may be made through abrasive water jet cutting, milling or laser-based methods.

In an advantageous embodiment, the cover panel further comprises a cover layer on the interior side. To provide a pleasant optical and/or haptical appearance, the interior side may be covered with a foil, which is peelable off prior to recycling the main panel section. Also, the application of color or coating, e.g. through a hydro dipping method, is conceivable. It is preferred if the cover layer is completely removable, particularly preferably mechanically and in one piece.

In an advantageous embodiment, the cover panel further comprises a plurality of fasteners for attaching an insulation packet. The insulation packet, which may be a secondary insulation packet, may be attached to the exterior side of the cover panel. Fasteners, such as pins or the like, can be used for holding or clamping the insulation packet. Of course the fasteners may be welded to the exterior side of the cover panel if they are made by the same thermoplastic material. However, screwing is also possible. The insulation packet may be a compressible, dimensionally stable foam that is clampable to the cover panel.

In an advantageous embodiment, the attachment device comprises brackets for fastening the panel to the structure. The brackets may preferably be arranged in a lower section of the cover panel, but may also be arranged in a top section. It is conceivable to provide brackets that allow hooking the cover panel into complementary shaped receiving element, to attach the window funnel to a window arrangement in the fuselage structure. Further, an upper edge or an element arranged at the upper edge may be clamped into another, structurally fixed component.

In an advantageous embodiment, the panel further comprises at least one sealing profile for engaging opposed edges of adjacent panels to seal a gap between the adjacent panels and to hold the edges relative to each other. The sealing element may extend along the edges of the cover panel that face edges of other cover panels. If the cover panel is a sidewall panel, this may refer to the lateral edges when looking directly onto the interior side of the cover panel. The sealing element further increases the stiffness of the arrangement of cover panels. Also, it provides for the function of tolerance compensation, as the appearance of the arrangement of two subsequent cover panels with the sealing element attached is harmonic even when the gap between the cover panels is irregular.

The invention further relates to a method according to claim 9.

In an advantageous embodiment, the method further comprises thermo-bending the main panel section to be curved before or after attaching the at least one stiffening element.

It is to be understood that the method according to the invention may further comprise the steps of cutting a window cutout into the main panel section. It may further comprise the step of attaching, in particular welding of a window funnel to the exterior side of the main panel section. Still further, it may comprise the step of providing a cover layer on the interior side. Furthermore, it may comprise attaching, in particular welding, a plurality of fasteners to the exterior side for attaching an insulation packet. Also, the method may include the step of providing at least one sealing profile for engaging opposed edges of adjacent cover panels to seal a gap between the adjacent cover panels and to hold the edges relative to each other.

The invention further relates to an aircraft as defined in claim 12.

In an advantageous embodiment, the cover panel is a sidewall panel, which spans over a plurality of windows, e.g. 2, 3, 4, 5, 6 or more, arranged in the fuselage of the aircraft. However, it may be possible to dimension the sidewall panels in such a way that it only spans over a single window.

### Brief description of the figures

In the following, the attached drawings are used to illustrate exemplary embodiments in more detail. The illustrations are schematic and not to scale. Identical reference numerals refer to identical or similar elements. They show:
- Fig. 1a to 7b: show subsequent steps and states of producing a cover panel based on a flat workpiece made from a single thermoplastic material as a starting point into a cover panel in form of a sidewall panel in different illustrations.
- Fig. 8: shows an aircraft.

### Detailed description of exemplary embodiments

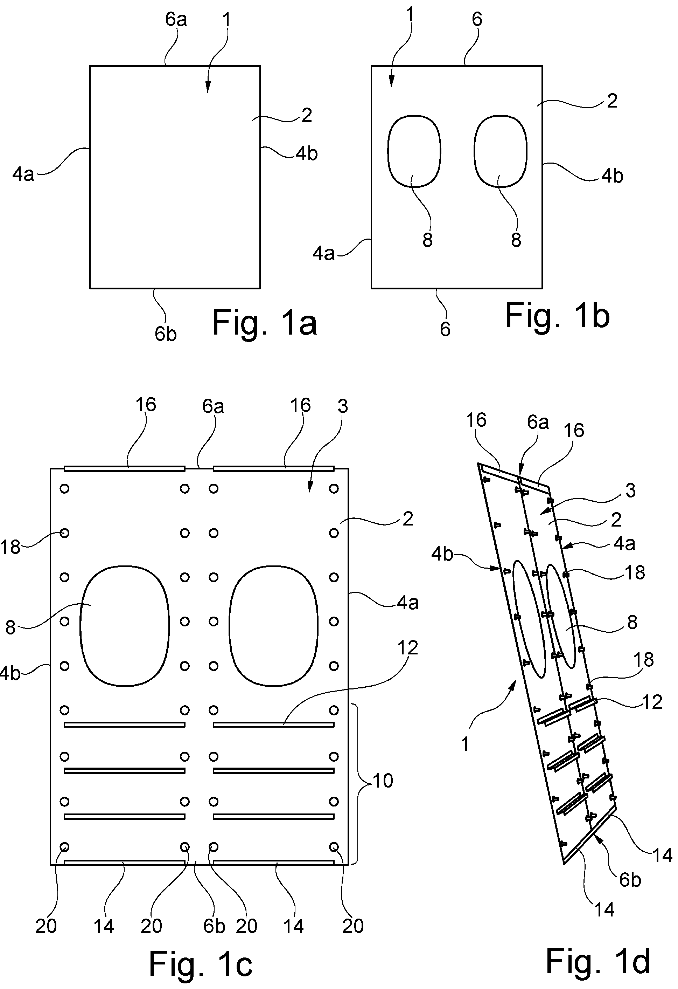

Fig. 1a shows a main panel section 2 in form of a workpiece 2, which is made from a thermoplastic material such as PEEK or PEKK, at the beginning of the manufacturing process for the cover panel. Here, the main panel section 2 is substantially flat and comprises a pair of two opposed lateral edges 4a and 4b as well as a pair of two opposed front edges 6a and 6b. These kind of workpieces may be provided by a manufacturer in form of a sheet-like material spool or a stack of sheets. They may be cut to size as required before conducting additional manufacturing steps. In fig. 1a, an interior side 1 is shown.

In fig. 1b, the main panel section 2 comprises two window cutouts 8, which may be provided by abrasive water jet cutting, milling or laser-based methods. In this exemplary embodiment, the cover panel to be manufactured is a sidewall panel that extends over two spaces between two frames, wherein exemplarily each space between two frames comprises a windows. The cover panel illustrated herein will be associated with two windows and thus comprises two window cutouts 8. However, other variants and other dimensions are conceivable. In particular, it is conceivable that spaces between two frames do not comprise a window, but may comprise other components, such as riser ducts for an environmental control system, or the like. In smaller aircraft, such as regional aircraft, consecutive spaces between frames sometimes are provided with a window and without a window in an alternating manner. Thus, the number and arrangement of window cutouts 8 is chosen to consider the exact design of the aircraft.

Further, as shown in fig. 1c, a lower section 10 of an exterior side 3 of the main panel section 2 is equipped with a plurality of stiffening elements 12, which are made from the same thermoplastic material, as the workpiece 2. They are welded onto the exterior side 3 and are preferably arranged parallel to each other as well as to the lower front edge 6b. In an installed state of the cover panel, the lower section 10 of the cover panel will be arranged underneath cabin windows and may experience mechanical impacts from passengers and baggage. Thus, to avoid excessive indentation of the cover panel, the stiffening elements 12 are provided. Here, two consecutive groups of stiffening elements are provided, which are arranged to enclose a vertical gap that allows a placement of the cover panel onto a frame between the two windows associated with the respective cover panel.

In addition, the lower front edge 6b is equipped with lower edge protection profiles 14 to prevent damaging the lower front edge 6b. At the opposed upper front edge 6a, upper edge protection profiles 16 are provided. Several fasteners 18 are distributed over the exterior side 3 and are capable of holding an insulation package, which is not shown in this illustration. In the lower section 10, attachment devices 20 are provided, which are designed to engage with complimentary-shaped receiving devices at a fuselage structure.

Fig. 1d shows the main panel section 2 in this state in a three-dimensional view to further illustrate the attached parts. Here, it is apparent that the fastener 18 and the stiffening profiles 12 protrude away from the main panel section 2. Exemplarily, the stiffening profiles 12 comprise an S-shaped cross-sectional surface to provide a sufficient geometrical moment of inertia. It is to be understood, that other cross-sectional surfaces are also possible and this illustration does not limit the invention.

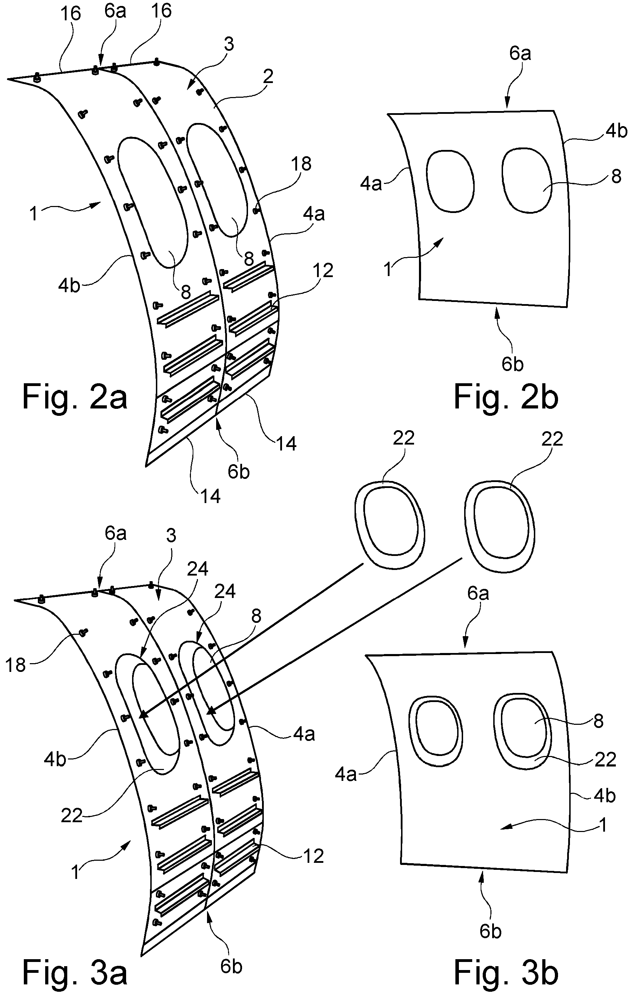

In figure 2a, the workpiece 2 is further processed by a thermal-bending process. It is heated to a glass transition temperature of exemplarily 140°C to 180°C in the case of PEEK or PEKK as the base material. Afterwards, the main panel section 2 has a distinctly curved shape, which conforms the shape of a commonly curved structure inside the aircraft. In fig. 2b, the curved main panel section 2 is shown from the interior side.

Figs. 3a and 3b show additional window funnels 22 being attached to the window cutout 8. The windows funnels 22 are preferably made by the same thermoplastic material as the main panel section 2. They are welded to two edge regions 24 around the window cutouts 8.

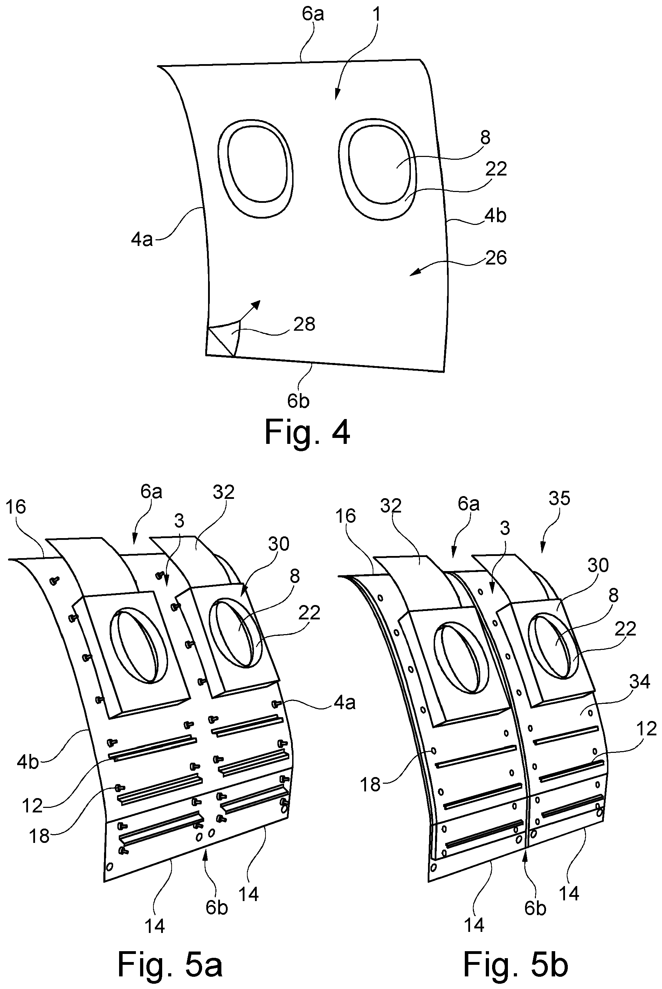

Figure 4 shows a cover layer 26 attached to the interior side 1 of the main panel section 2. This may be a cover foil having a desired texture and color. Preferably it is designed to be peeled off for recycling, as indicated by a corner 28 of the cover layer 26 at the beginning of being peeled off in this illustration.

For further completion, window parts 30 are attached to the exterior side 3 of the main panel section 2 as shown in fig. 5a. They include blinds 32 that are movable in front of and away from the window funnel 22. These may be designed to be removable from the main cover section 2 for recycling. However, they may also be made of the same material as the main panel section 2.

Lastly, insulation packets 34 are installed at the exterior side 3 as shown in fig. 5b and held by the fasteners 18. In this state, the arrangement shown in fig. 5b represents a substantially complete cover panel 35.

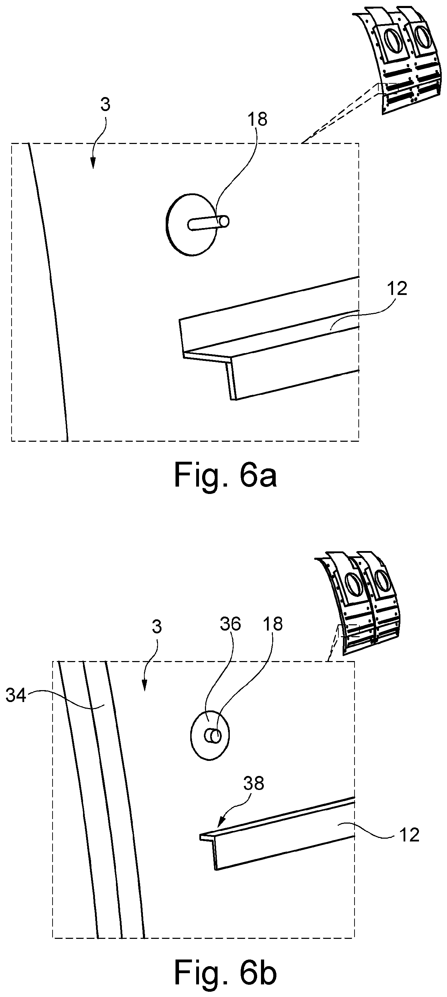

As shown in fig. 6a, the fasteners 18 may comprise a pin, onto which the insulation packets 34 can be pressed, such that the pin protrudes through the insulation packet 34. A securing washer 36 is snapped onto the pin and thus secures the insulation packet 34 to the fastener 18.

The insulation packet 34 comprises cutouts 38 to let the stiffening elements 12 protrude through the insulation packet 34. The extension of the stiffening elements 12 in an outwards direction from the exterior side 3 may conform the material thickness of the insulation packet 34 to provide a harmonic, even surface on the back of the cover panel 35.

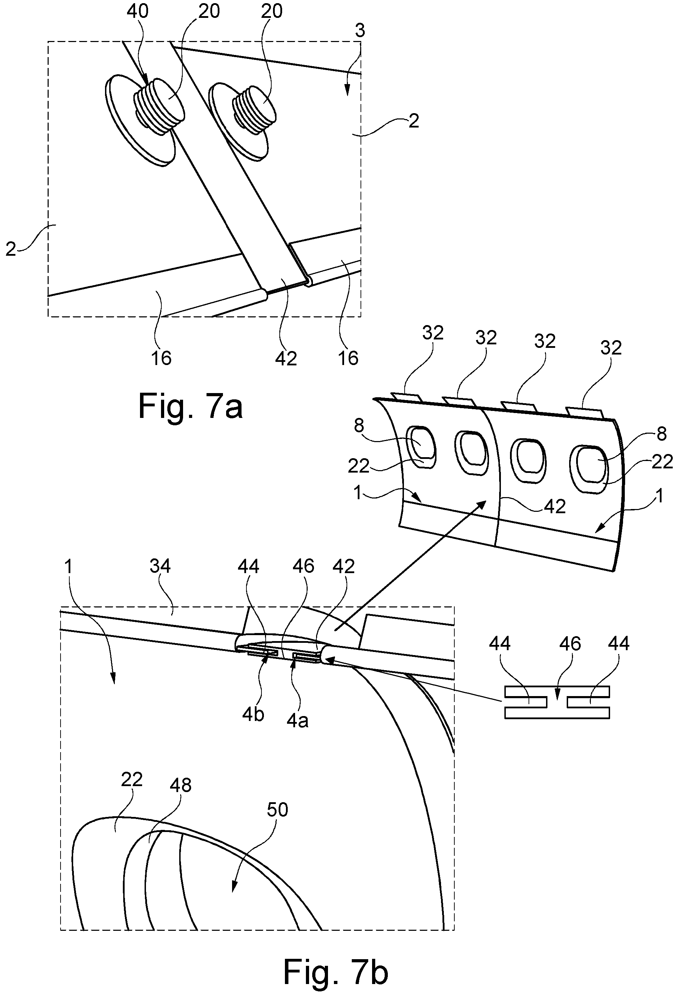

Fig. 7a shows the attachment devices 20 of two adjacent cover panels 35 in an exemplary embodiment. Here, the attachment devices 20 are designed to be pressed onto a complimentary formed receiving element (not shown) that is capable of snapping into the attachment devices 20, e.g. into circumferential recesses 40.

Between the two consecutive cover panels 35, a sealing profile 42 is provided, which is shown in further detail in figure 7b. Here, the sealing profile is mainly flat and substantially extends along the lateral edges 4a, 4b of the cover panels 35. It comprises two opposite lateral recesses 44 that are separated by a central web 46. Both adjacent cover panels 35 are inserted into the recesses 44 and are separated by the web 46. Thus, the cover panels 35 hold each other through the constraint by the sealing element 42. An impact or a local pressing onto one of the cover panels 35 does not lead to the creation of a gap between the lateral edges 4a and 4b, in which objects can be inserted and/or squeezed.

In this view, an interior window pane 50 is visible, which is attached to the window funnel 22. The window funnel 22 itself may be connected to an exterior window arranged in the fuselage structure, e.g. by a set of screws (not shown) radially extending through a respective window frame into the window funnel 22. A cover ring 48 is snapped into the window funnel 22 onto the respective window frame to cover the screws. The cover panel 35 is thus also held at the exterior window frame. This arrangement can be completely disassembled to improve the recyclability.

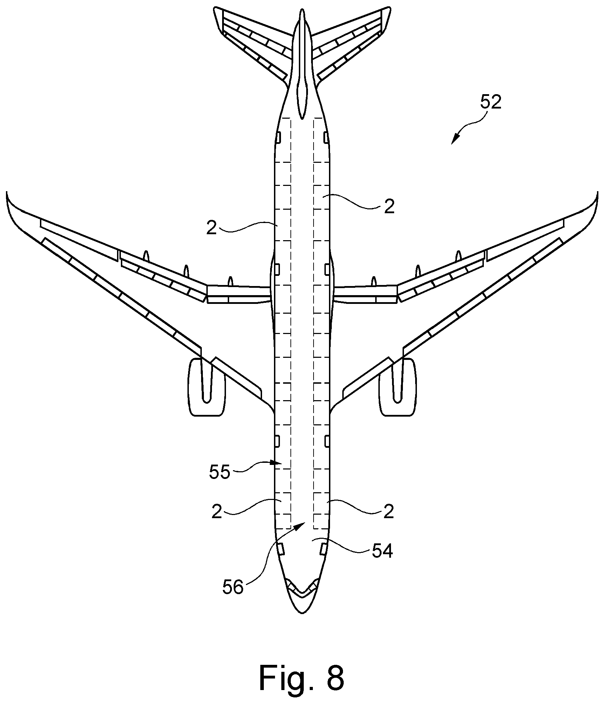

Lastly, figure 8 shows an aircraft 52 having a fuselage 54 with a fuselage structure 55, in which an interior space 56 is created. A series of cover panels 24 is provided. However, besides using the cover panels 35 in the form of sidewall panels, also ceiling panels, dado panels and other cover panels can be integrated into the interior space 56.

### Reference numerals

- 1: interior side
- 2: main panel section
- 3: exterior side
- 4a, 4b: lateral edge
- 6a, 6b: front edge
- 8: window cutout
- 10: lower section
- 12: stiffening element
- 14: lower edge protection profile
- 16: upper edge protection profile
- 18: fastener
- 20: attachment device
- 22: window funnel
- 24: edge region
- 26: cover layer
- 28: corner
- 30: window part
- 32: blind
- 34: insulation packet
- 35: cover panel
- 36: securing washer
- 38: cutout (for stiffening elements)
- 40: circumferential recess
- 42: sealing profile
- 44: recess
- 46: web
- 48: cover ring
- 50: interior window pane
- 52: aircraft
- 54: fuselage
- 55: fuselage structure
- 56: interior space

## Claims

1. A cover panel (35) for covering a part of a fuselage structure (55) in an interior space (56) of an aircraft (52), comprising:
a main panel section (2) having an interior side (1) and an exterior side (3), and
at least one attachment device (20) coupled with the exterior side (3),
wherein the main panel section (2) is exclusively made from a single thermoplastic material,
wherein the main panel section (2) is made from a substantially flat thermoplastic workpiece, and
wherein at least one stiffening element (12) made from the same thermoplastic material is welded to the exterior side (3) to enhance the dimensional stability of the cover panel (35),
wherein the at least one attachment device (20) is adapted for attaching the cover panel (35) to the respective fuselage structure (55);
wherein the at least one attachment device (20) is made from the same thermoplastic material, and
wherein additional components, which may be added to the main panel section, are made from the same thermoplastic material.

2. Cover panel (35) of claim 1,
wherein the cover panel (35) is a sidewall panel as a lateral delimitation of a cabin.

3. Cover panel (35) of claim 1 or 2,
wherein the substantially flat thermoplastic workpiece is thermo-bent to be curved before or after attaching the at least one stiffening element (12).

4. Cover panel (35) of any of the preceding claims,
further comprising a window cutout (8) and a window funnel (22) attached to the exterior side (3).

5. Cover panel (35) of any of the preceding claims,
further comprising a cover layer (26) on the interior side (1).

6. Cover panel (35) of any of the preceding claims,
further comprising a plurality of fasteners (18) for attaching an insulation packet (34).

7. Cover panel (35) of any of the preceding claims,
wherein the attachment device (20) comprising brackets for fastening the panel to the fuselage structure (55).

8. Cover panel (35) of any of the preceding claims,
further comprising at least one sealing profile (42) for engaging opposed edges (4a, 4b) of adjacent cover panels (35) to seal a gap between the adjacent cover panels (35) and to hold the edges (4a, 4b) relative to each other.

9. A method for producing a cover panel (35) for covering a part of a fuselage structure (55) in an interior space (56) of an aircraft (52), comprising the steps:
- providing a main panel section (2) as a flat workpiece exclusively made from a single thermoplastic material having an interior side (1) and an exterior side (3), and
- coupling at least one attachment device (20) with the exterior side (3), wherein the at least one attachment device (20) is adapted for attaching the cover panel (35) to the respective fuselage structure (55);
wherein the main panel section (2) is made from a substantially flat thermoplastic workpiece, and
wherein at least one stiffening element (12) made from the same thermoplastic material is welded to the exterior side (3) to enhance the dimensional stability of the cover panel (35),
wherein the at least one attachment device (20) is made from the same thermoplastic material, and
wherein additional components, which may be added to the main panel section, are made from the same thermoplastic material.

10. Method of claim 9**,** further comprising thermo-bending the main panel section (2) to be curved before or after attaching the at least one stiffening element (12).

11. An aircraft (52), comprising a fuselage (54) having a fuselage structure (55) and an interior space (56) created therein, wherein at least one cover panel (35) of any of the claims 1 to 8 is arranged in the interior space (56) to cover at least a part of the fuselage structure (55).

12. Aircraft (52) of claim 11**,**
wherein the cover panel (35) is a sidewall panel, which spans over a plurality of windows arranged in the fuselage (54) of the aircraft (52).

## Patentansprüche

1. Abdeckplatte (35) zum Abdecken eines Teils einer Rumpfstruktur (55) in einem Innenraum (56) eines Flugzeugs (52), umfassend:
einen Hauptplattenabschnitt (2) mit einer Innenseite (1) und einer Außenseite (3), und
mindestens eine Befestigungsvorrichtung (20), die mit der Außenseite (3) gekoppelt ist,
wobei der Hauptplattenabschnitt (2) ausschließlich aus einem einzigen thermoplastischen Material hergestellt ist,
wobei der Hauptplattenabschnitt (2) aus einem im Wesentlichen flachen
thermoplastischen Werkstück hergestellt ist, und
wobei mindestens ein Versteifungselement (12), das aus dem gleichen thermoplastischen Material hergestellt ist, mit der Außenseite (3) verschweißt ist,
um die Formstabilität der Abdeckplatte (35) zu verbessern,
wobei die mindestens eine Befestigungsvorrichtung (20) zum Befestigen der
Abdeckplatte (35) an der jeweiligen Rumpfstruktur (55) ausgelegt ist;
wobei die mindestens eine Befestigungsvorrichtung (20) aus dem gleichen thermoplastischen Material hergestellt ist, und
wobei zusätzliche Komponenten, die dem Hauptplattenabschnitt hinzugefügt werden können, aus dem gleichen thermoplastischen Material hergestellt sind.

2. Abdeckplatte (35) nach Anspruch 1,
wobei die Abdeckplatte (35) eine Seitenwandplatte als seitliche Begrenzung einer Kabine ist.

3. Abdeckplatte (35) nach Anspruch 1 oder 2,
wobei das im Wesentlichen flache thermoplastische Werkstück thermogebogen wird, um vor oder nach dem Anbringen des mindestens einen Versteifungselements (12) gekrümmt zu werden.

4. Abdeckplatte (35) nach einem der vorhergehenden Ansprüche,
ferner umfassend einen Fensterausschnitt (8) und einen Fenstertrichter (22), die an der Außenseite (3) angebracht sind.

5. Abdeckplatte (35) nach einem der vorhergehenden Ansprüche,
ferner umfassend eine Abdeckschicht (26) auf der Innenseite (1).

6. Abdeckplatte (35) nach einem der vorhergehenden Ansprüche,
ferner umfassend eine Vielzahl von Befestigungselementen (18) zum Befestigen eines Isolierpakets (34).

7. Abdeckplatte (35) nach einem der vorhergehenden Ansprüche,
wobei die Befestigungsvorrichtung (20) Halterungen zum Befestigen der Platte an der Rumpfstruktur (55) umfasst.

8. Abdeckplatte (35) nach einem der vorhergehenden Ansprüche,
ferner umfassend mindestens ein Dichtungsprofil (42) zum Eingreifen in gegenüberliegende Kanten (4a, 4b) benachbarter Abdeckplatten (35), um einen Spalt zwischen den benachbarten Abdeckplatten (35) abzudichten und die Kanten (4a, 4b) relativ zueinander zu halten.

9. Verfahren zum Herstellen einer Abdeckplatte (35) zum Abdecken eines Teils einer Rumpfstruktur (55) in einem Innenraum (56) eines Flugzeugs (52), umfassend die Schritte:
- Bereitstellen eines Hauptplattenabschnitts (2) als ein flaches Werkstück, das ausschließlich aus einem einzigen thermoplastischen Material hergestellt ist, das eine Innenseite (1) und eine Außenseite (3) aufweist, und
- Koppeln mindestens einer Befestigungsvorrichtung (20) mit der Außenseite (3), wobei die mindestens eine Befestigungsvorrichtung (20) zum Befestigen der Abdeckplatte (35) an der jeweiligen Rumpfstruktur (55) ausgelegt ist;
wobei der Hauptplattenabschnitt (2) aus einem im Wesentlichen flachen thermoplastischen Werkstück hergestellt ist, und
wobei mindestens ein Versteifungselement (12), das aus dem gleichen thermoplastischen Material hergestellt ist, mit der Außenseite (3) verschweißt ist, um die Formstabilität der Abdeckplatte (35) zu verbessern,
wobei die mindestens eine Befestigungsvorrichtung (20) aus dem gleichen thermoplastischen Material hergestellt ist, und
wobei zusätzliche Komponenten, die dem Hauptplattenabschnitt hinzugefügt werden können, aus dem gleichen thermoplastischen Material hergestellt sind.

10. Verfahren nach Anspruch 9,
ferner umfassend Thermobiegen des Hauptplattenabschnitts (2), um vor oder nach dem Anbringen des mindestens einen Versteifungselements (12) gekrümmt zu werden.

11. Flugzeug (52), umfassend einen Rumpf (54) mit einer Rumpfstruktur (55) und einem darin geschaffenen Innenraum (56), wobei mindestens eine Abdeckplatte (35) nach einem der Ansprüche 1 bis 8 in dem Innenraum (56) angeordnet ist, um mindestens einen Teil der Rumpfstruktur (55) abzudecken.

12. Flugzeug (52) nach Anspruch 11, wobei die Abdeckplatte (35) eine Seitenwandplatte ist, die eine Vielzahl von Fenstern überspannt, die in dem Rumpf (54) des Flugzeugs (52) angeordnet sind.

## Revendications

1. Panneau de couverture (35) pour couvrir une partie d'une structure de fuselage (55) dans un espace intérieur (56) d'un aéronef (52), comprenant :
une section de panneau principale (2) ayant un côté intérieur (1) et un côté extérieur (3), et
au moins un dispositif de fixation (20) couplé au côté extérieur (3),
dans lequel la section de panneau principale (2) est exclusivement réalisée à partir d'un seul matériau thermoplastique,
dans lequel la section de panneau principale (2) est réalisée à partir d'une pièce à usiner thermoplastique sensiblement plate, et
dans lequel au moins un élément de raidissement (12) réalisé à partir du même matériau thermoplastique est soudé au côté extérieur (3) pour améliorer la stabilité dimensionnelle du panneau de couverture (35),
dans lequel l'au moins un dispositif de fixation (20) est adapté pour fixer le panneau de couverture (35) à la structure de fuselage (55) respective ;
dans lequel l'au moins un dispositif de fixation (20) est réalisé à partir du même matériau thermoplastique, et
dans lequel des composants supplémentaires, qui peuvent être ajoutés à la section de panneau principale, sont réalisés à partir du même matériau thermoplastique.

2. Panneau de couverture (35) selon la revendication 1,
dans lequel le panneau de couverture (35) est un panneau de paroi latérale en tant que délimitation latérale d'une cabine.

3. Panneau de couverture (35) selon la revendication 1 ou 2,
dans lequel la pièce à usiner thermoplastique sensiblement plate est thermo-cintrée pour être incurvée avant ou après la fixation de l'au moins un élément de raidissement (12).

4. Panneau de couverture (35) selon l'une quelconque des revendications précédentes,
comprenant en outre une découpe de fenêtre (8) et un entonnoir de fenêtre (22) fixés au côté extérieur (3).

5. Panneau de couverture (35) selon l'une quelconque des revendications précédentes,
comprenant en outre une couche de couverture (26) sur le côté intérieur (1).

6. Panneau de couverture (35) selon l'une quelconque des revendications précédentes,
comprenant en outre une pluralité d'éléments de fixation (18) pour fixer un paquet d'isolation (34).

7. Panneau de couverture (35) selon l'une quelconque des revendications précédentes,
dans lequel le dispositif de fixation (20) comprend des supports pour fixer le panneau à la structure de fuselage (55).

8. Panneau de couverture (35) selon l'une quelconque des revendications précédentes,
comprenant en outre au moins un profil d'étanchéité (42) pour mettre en prise des bords opposés (4a, 4b) de panneaux de couverture adjacents (35) pour sceller un espace entre les panneaux de couverture adjacents (35) et pour maintenir les bords (4a, 4b) l'un par rapport à l'autre.

9. Procédé de production d'un panneau de couverture (35) pour couvrir une partie d'une structure de fuselage (55) dans un espace intérieur (56) d'un aéronef (52), comprenant les étapes consistant à :
- fournir une section de panneau principale (2) en tant que pièce à usiner plate exclusivement réalisée à partir d'un seul matériau thermoplastique ayant un côté intérieur (1) et un côté extérieur (3), et
- coupler au moins un dispositif de fixation (20) au côté extérieur (3), dans lequel l'au moins un dispositif de fixation (20) est adapté pour fixer le panneau de couverture (35) à la structure de fuselage (55) respective ;
dans lequel la section de panneau principale (2) est réalisée à partir d'une pièce à usiner thermoplastique sensiblement plate, et
dans lequel au moins un élément de raidissement (12) réalisé à partir du même matériau thermoplastique est soudé au côté extérieur (3) pour améliorer la stabilité dimensionnelle du panneau de couverture (35),
dans lequel l'au moins un dispositif de fixation (20) est réalisé à partir du même matériau thermoplastique, et
dans lequel des composants supplémentaires, qui peuvent être ajoutés à la section de panneau principale, sont réalisés à partir du même matériau thermoplastique.

10. Procédé selon la revendication 9,
comprenant en outre le thermo-cintrage de la section de panneau principale (2) pour être incurvée avant ou après la fixation de l'au moins un élément de raidissement (12).

11. Aéronef (52), comprenant un fuselage (54) ayant une structure de fuselage (55) et un espace intérieur (56) créé dans celui-ci, dans lequel au moins un panneau de couverture (35) selon l'une quelconque des revendications 1 à 8 est agencé dans l'espace intérieur (56) pour couvrir au moins une partie de la structure de fuselage (55).

12. Aéronef (52) selon la revendication 11, dans lequel le panneau de couverture (35) est un panneau de paroi latérale, qui s'étend sur une pluralité de fenêtres agencées dans le fuselage (54) de l'aéronef (52).
